Europäisches Patentamt

European Patent Office

Office européen des brevets

(19)

(11) Veröffentlichungsnummer: **0 192 166 B1**

# (12) EUROPÄISCHE PATENTSCHRIFT

(45) Veröffentlichungstag der Patentschrift: **08.05.91**   (51) Int. Cl.5: **G05D 7/06**

(21) Anmeldenummer: **86101719.2**

(22) Anmeldetag: **11.02.86**

(54) **Verfahren zur Regelung oder Steuerung des Flusses einer zähen Flüssigkeit, die von einer Maschine selbstätig als Naht aufgetragen wird.**

(30) Priorität: **22.02.85 DE 3506110**

(43) Veröffentlichungstag der Anmeldung:
**27.08.86 Patentblatt 86/35**

(45) Bekanntmachung des Hinweises auf die
Patenterteilung:
**08.05.91 Patentblatt 91/19**

(84) Benannte Vertragsstaaten:
**DE FR GB SE**

(56) Entgegenhaltungen:
**EP-A- 0 125 771**
**US-A- 3 890 922**
**US-A- 4 026 439**

**PATENT ABSTRACTS OF JAPAN, Band 8, Nr.
216 (M-329)[1653], 3. Oktober 1984; & JP-A-59
100 069 (SANSUTAA GIKEN K.K.) 09-06-1984**

(73) Patentinhaber: **Schucker, Josef**
**Vogelsangstrasse 3**
**W-7530 Pforzheim(DE)**

(72) Erfinder: **Schucker, Josef**
**Vogelsangstrasse 3**
**W-7530 Pforzheim(DE)**

(74) Vertreter: **Wolf, Eckhard, Dr.-Ing.**
**Eugensplatz 5 Postfach 13 10 01**
**W-7000 Stuttgart 1(DE)**

Rank Xerox (UK) Business Services

## Beschreibung

Die vorliegende Erfindung betrifft ein Verfahren zur Regelung oder Steuerung des Flusses einer zähen Flüssigkeit gemäß dem Oberbegriff des Anspruches 1.

In der Industrie werden Automaten, insbesondere Roboter unter anderem dafür eingesetzt, auf vorgegebenen Bahnen selbsttätig eine Naht aus einer zähen Flüssigkeit aufzutragen. Bei der zähen Flüssigkeit kann es sich beispielsweise um einen Kleber, eine Dichtungsmasse oder eine Kunststoffmasse handeln. Ein konkretes Beispiel stellt das von einem gesteuerten Roboter ausgeführte Auftragen eines Klebers längs einer bestimmten Bahn auf einem Werkstück dar. Dieser Vorgang kommt beispielsweise in der Autoindustrie vor beim Auftragen eines Klebers oder einer Dichtungsmasse auf der Innenseite des Außenbleches von Autotüren, auf die anschließend das Innenblech der Tür aufgeklebt wird.

Ein Problem bei dieser Technik besteht darin, sicherzustellen, daß die aufgetragene Naht tatsächlich die gewünschte Dicke hat, d.h. pro Längeneinheit der Bahn eine gewünschte Menge der zähen Flüssigkeit aufgetragen wird. Die pro Zeiteinheit ausgespritzte oder aufgetragene Menge wird Fluß genannt. Der aus der Auftragevorrichtung austretende Fluß muß also in einem bestimmten Verhältnis zu der sich innerhalb eines Arbeitszyklus häufig ändernden Bahngeschwindigkeit des Roboters stehen.

Zur Durchführung des vorgenannten Verfahrens ist es bekannt, die vom Roboterarm geführte Auftragevorrichtung über einen flexiblen Schlauch mit der zähen Flüssigkeit zu versorgen, wobei der Schlauch an einen mit der zähen Flüssigkeit gefüllten Zylinder angeschlossen ist, dessen Kolben mit konstanter Kraft die Flüssigkeit aus dem Zylinder herausdrückt. Durch Einstellung dieser Kraft kann der Flüssigkeitsfluß verändert werden. Bei diesem bekannten Verfahren kann der Flüssigkeitsfluß jedoch infolge unterschiedlicher Viskosität, die sich mit der Temperatur ändert, sowie durch Verschleiß an der Düsenöffnung der Auftragevorrichtung von dem gewünschten Wert abweichen.

Ferner ist es bereits bekannt, zur Einstellung der Dicke der Flüssigkeitsnaht den Antrieb des Kolbens in dem vorgenannten Zylinder so auszubilden, daß der Kolben unabhängig vom zu überwindenden Widerstand mit einer einstellbaren konstanten Geschwindigkeit arbeitet. Die Auftragevorrichtung arbeitet bei diesem Verfahren mit konstanter Düsenöffnung. Eine Kontrolle, ob die aufgetragene Menge pro Zeiteinheit dem gewünschten Wert entspricht, findet nicht statt. Eine Verstellung ist nur durch Veränderung der Geschwindigkeit des Kolbens möglich, und diese Verstellung ist mit einer großen Zeitkonstanten behaftet. Beim Übergang von einem Takt zum nächtsten innerhalb eines Arbeitszyklus wird häufig die Geschwindigkeit und/oder die pro Längeneinheit aufzutragende Menge der zähen Flüssigkeit geändert, so daß in diesen Zeitpunkten der Flüssigkeitsfluß geändert werden muß. Hierbei erweist sich die hohe Viskosität und damit die Trägheit des Klebers als nachteilig. Für den Übergang von einem zum nächsten Bahnabschnitt steht nur eine sehr kurze Zeit zur Verfügung, und innerhalb dieser Zeit muß die erforderliche Flußänderung durchgeführt werden. Außerdem machen sich bei diesem Verfahren die Druckänderungen in der zähen Flüssigkeit störend bemerkbar, und zwar einerseits deshalb, weil die zähe Flüssigkeit eine spürbare Kompressibilität aufweist, und andererseits deshalb, weil die Zuführungsschläuche bei den hohen Betriebsdrücken von 100 bis 200 bar expandieren und bei Druckentlastung sich zusammenziehen. Dadurch entstehen in Form transienter Vorgänge Schwankungen in der pro Längeneinheit aufgetragenen zähen Flüssigkeit. Der letztgenannte Effekt könnte zwar durch Anbringung der Kolben-Zylinderanordnung auf der Roboterhand weitgehend vermindert werden, jedoch würde dann das Gewicht des für schnelle Bewegungen bestimmten Roboterarms erheblich vergrößert werden, was wiederum die Auftragegeschwindigkeit nachteilig beeinflussen würde.

Der Erfindung liegt die Aufgabe zugrunde, ein Verfahren der eingangs genannten Art zu entwickeln, bei welchem der aus der Auftragevorrichtung austretende Flüssigkeitsfluß unabhängig von der Viskosität der Flüssigkeit und vom Abnutzungszustand der Düse der Auftragevorrichtung ist und bei welchem bei einer Änderung der Bahngeschwindigkeit oder der pro Längeneinheit der Bahn aufzutragenden Flüssigkeitsmenge die Auftragevorrichtung sehr schnell anspricht.

Zur Lösung dieser Aufgabe wird ein Verfahren gemäß dem Oberbegriff des Anspruches 1 vorgeschlagen, welches erfindungsgemäß die im kennzeichnenden Teil des Anspruches 1 genannten Merkmale hat.

Vorteilhafte Ausgestaltungen der Erfindung sind in den weiteren Ansprüchen genannt.

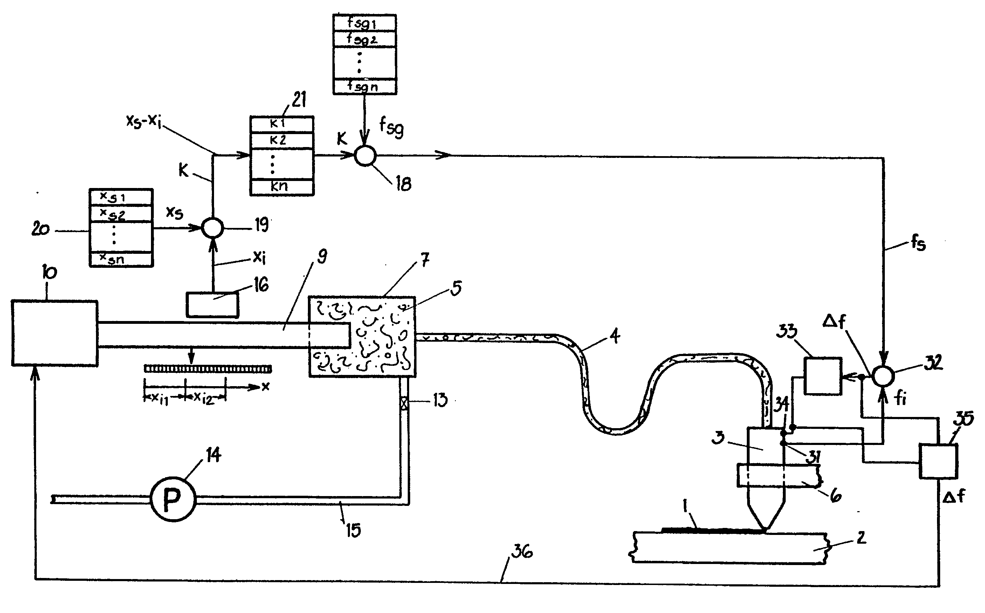

Anhand des in der Figur gezeigten Ausführungsbeispiels soll die Erfindung näher erläutert werden. Die Figur zeigt den prinzipiellen Aufbau einer Anordnung, die nach dem Verfahren gemäß der Erfindung arbeitet.

Mit 6 ist der Arm eines im übrigen nicht dargestellten Roboters bezeichnet, an dessen freies Ende mittels eines Greifwerkzeuges eine Auftragevorrichtung 3, zum Beispiel eine Spritzpistole, eingespannt ist. Der Roboter führt die Auftragevorrichtung 3 mit einer bestimmten Geschwindigkeit längs einer Bahn nahe an der Oberfläche eines Werkstückes 2, auf welcher eine Klebernaht aufgetragen werden soll. Die Auftragevorrichtung 3 ist über einen flexiblen Schlauch 4 an einen Zylinder 7 angeschlossen, in welchem sich heißer oder kalter Kleber befindet, der zu Beginn eines Arbeitszyklus über eine Leitung 15 und ein Ventil 13 mittels einer Pumpe 14, eingefüllt wird. Im Zylinder 7 ist ein Kolben 9 angeordnet, dessen Antrieb 10 so ausgelegt ist, daß er den Kolben mit einem einstellbaren konstanten Druck gegen den Kleber verschiebt.

Die vom Roboter durchlaufene Bahn ist in einzelne Bahnabschnitte unterteilt, wobei diese Bahnabschnitte gerade oder gekrümmte Abschnitte sein können. Die Zeit zum Durchlaufen eines Bahnabschnittes wird Takt genannt. Das Durchlaufen der gesamten Bahn stellt einen Arbeitszyklus dar. An den Enden der Bahnabschnitte findet häufig eine Richtungsänderung statt. Der Roboter durchfährt die Bahn in der Regel mit seiner maximal möglichen Geschwindigkeit. Diese ist für gekrümmte Bahnabschnitte in der Regel kleiner als für gerade.

Die Auftragevorrichtung hat eine Düsenöffnung, deren Durchschnittsquerschnitt mittels einer nicht dargestellten Verstellvorrichtung verändert werden kann. Diese Verstellmöglichkeit dient als Stellglied für die Regelung des Flüssigkeitsflusses. Die Verstellung erfolgt beispielsweise durch Drehung oder translatorische Verschiebung einer Kolbenstange, und durch Messung der Stellung dieser Kolbenstange erhält man einen Wert für die Größe der Düsenöffnung, der als Istwert $f_i$ für den Fluß verwendet wird. In der Figur ist dieses Meßglied nur symbolisch an der Stelle 31 angedeutet. In einem Vergleichglied 32 wird der Flußistwert $f_i$ mit einem Flußsollwert $f_s$ verglichen und die Regelabweichung $\Delta f$ beaufschlagt einen Regler 33, der ein in der Auftragevorrichtung vorhandenes Verstellglied, das symbolisch mit 34 angedeutet ist, steuert.

Der Sollwert $f_s$ für den Fluß setzt sich zusammen aus einem Grundsollwert $f_{sg}$ und einem Korrektursollwert K, der im Summierungsglied 18 algebraisch zu dem Grundsollwert addiert wird. Der Grundsollwert geht von einer bestimmten Viskosität der Flüssigkeit und einem bestimmten Zusammenhang zwischen der Düsenöffnung und dem Stellglied 34 für die Düsenöffnung der Auftragevorrichtung aus. Durch den Korrektursollwert K werden Viskositätsänderungen sowie durch Abnutzung bedingte Veränderungen der Düsenöffnung bei gegebener Stellung des Stellgliedes erfaßt und kompensiert. Zu diesem Zweck werden mittels eines symbolisch dargestellten Wegmessers 16 die Teilwege $x_i$ gemessen, die der Kolben 9 im Zylinder 5 während des Durchlaufens der einzelnen Takte eines Arbeitszyklus des Roboters zurücklegt. Diese Werte $x_i$ werden in einem Summierungsglied 19 von entsprechenden Sollwerten für die pro Takt aufzutragende Menge der zähen Flüssigkeit subtrahiert.

Diese Sollwerte kommen von einem Sollwertgeber 20, der in der Figur für einen Arbeitszyklus aus n Takten symbolisch angedeutet ist. Die Differenzwerte $x_s - x_i$ für die einzelnen Takte bilden die Korrekturwerte für den Sollwert. Sie werden während des gerade in Ausführung begriffenen Arbeitszyklus in einem Speicher 21 gespeichert. Im darauffolgenden Arbeitszyklus werden die im vorangegangenen Arbeitszyklus gewonnenen Korrektursollwerte zu dem Grundsollwert $f_{sg}$ algebraisch addiert. Auch dieser Grundsollwert kann grundsätzlich für die einzelnen Takte des Arbeitszyklus unterschiedliche Werte haben, was beispielsweise dann der Fall ist, wenn beim Übergang von einem Takt zum nächsten Takt sich die Bahngeschwindigkeit ändert, die aufzutragende Nahtdicke aber konstant bleiben soll.

Für den Fall, daß das Stellglied 34 an die obere Grenze seines Verstellbereiches stößt (maximale Öffnung der Düse), ohne daß der Flußistwert den Flußsollwert erreicht, kann der von der Antriebsanordnung 10 auf den Kolben 9 ausgeübte Druck erhöht werden. Zu diesem Zweck wird das Signal $\Delta f$, zweckmäßigerweise über ein nicht dargestelltes Schwellwertglied, über die Signalleitung 36 auf den Antrieb 10 des Kolbens zur Einwirkung gebracht.

Wie bereits festgestellt wurde, ist eine Verstellung der Düsenöffnung beispielsweise auch dann erforderlich, wenn die Dicke der Naht beim Übergang von einem Bahnabschnitt (Takt) zum nächsten Bahnabschnitt verändert werden soll. Die für diese Verstellung verfügbare Zeit ist außerordentlich gering, da der Verweilzustand des Roboters bei diesem Übergang sehr kurz ist. Sie liegt beispielsweise bei etwa 20 ms. Um die hierfür erforderliche sehr schnelle Verstellung der Düsenöffnung sicher zu stellen, kann die Verstellung der Düsenöffnung mittels eines elektrischen Antriebs erfolgen, der mit getaktetem Gleichstrom betrieben wird, wobei kurzfristig mit einer Überspannung gearbeitet wird.

Das Verfahren nach der Erfindung ist auch sinnvoll, wenn der Flüssigkeitsfluß nicht geregelt, sondern nur gesteuert wird, also eine Erfassung des Istwertes $f_i$ nicht stattfindet.

## Ansprüche

1. Verfahren zur Regelung oder Steuerung des Flusses einer zähen Flüssigkeit, die während eines Arbeitszyklus von einer von einem Roboter geführten, mit einer Düse versehenen Auftragevorrichtung (3) als Naht (1) auf einen Körper (2) aufgetragen wird, wobei die zähe Flüssigkeit der Auftragevorrichtung aus einem Zylinder (7) fortlaufend zugeführt wird, in welchem ein von einer Antriebsvorrichtung (10) verschiebbarer Kolben (9) einen konstanten Druck auf die Flüssigkeit ausübt, **dadurch gekennzeichnet**, daß der ein Maß für die Flußmenge bildende Weg ($x_i$) gemessen wird, den der Kolben (9) in der Zeit zurücklegt, in der der Roboter eine bestimmte Bahnstrecke (n) durchläuft, daß der Meßwert ($x_i$) für den Kolbenweg mit einem Sollwert ($x_s$) für den Kolbenweg verglichen wird und daß der Differenzwert ($x_s$ - $x_i$) gespeichert wird und beim Durchlaufen der Bahnstrecke (n) während des folgenden Arbeitszyklus als Korrektursollwert (K) algebraisch zu einem Grundsollwert ($f_{sg}$) für eine Regelung oder eine Steuerung der Düsenöffnung der Auftragevorrichtung (3) addiert wird.

2. Verfahren nach Anspruch 1, **dadurch gekennzeichnet**, daß die Verstellung der Düsenöffnung der Auftragevorrichtung (3) durch einen elektrischen Antrieb erfolgt.

3. Verfahren nach nach einem der vorhergehenden Ansprüche, **dadurch gekennzeichnet**, daß bei maximaler Öffnung der Düsenöffnung der Auftragevorrichtung (3) der auf den Kolben (9) der Kolben-Zylinderanordnung (9,7) ausgeübte Druck in Abhängigkeit des Sollwertes oder der Regelabweichung für den Fluß verstellt wird.

## Claims

1. Flow regulation or control method for the flow of a viscous fluid, which is applied in a work cycle as a seam (1) to a body (2) by an applicating means (3), which is guided by a robot and provided with a nozzle, whereby the viscous fluid is continuously supplied to the applicating means from a cylinder (7), wherein a piston (9), which is displaceable by a drive arrangement (10), exerts a constant pressure onto the fluid, characterised in that the path ($x_i$) passed by the piston (9) during the time in which the robot passes a certain path (n), is measured as a flow quantity measure, that the measured value ($x_i$) of the piston path is compared with a nominal value ($x_s$) of the piston path, and that the differential value ($x_s$ -$x_i$) is stored and, during the passage of the path (n) in the following work cycle, algebraically added to a base nominal value ($f_{sg}$) for regulating or controlling the nozzle aperture of the applicating means (3).

2. Method according to claim 1, characterised in that the nozzle aperture of the applicating means (3) is adjusted by means of an electric drive.

3. Method according to one of the above claims, characterised in that with maximum opening of the nozzle aperture of the applicating means (3), the pressure exerted on the piston (9) of the piston-cylinder arrangement (9, 7) is adjusted in dependence on the nominal value or on the control deviation of the flow.

## Revendications

1. Procédé de régulation ou de commande du débit d'un fluide visqueux qui, au cours d'un cycle opératoire, est appliqué comme filet (1) sur un corps (2) par un dispositif d'application (3) guidé par un robot et muni d'une tuyère, le fluide visqueux étant amené en continu au dispositif d'application à partir d'un cylindre (7) dans lequel un piston (9) déplaçable par un mécanisme d'entraînement (10) exerce une pression constante sur le fluide, **caractérisé en ce** que la distance ($x_i$) constituant un critère pour la quantité de fluide et parcourue par le piston (9) dans le temps que met le robot à parcourir un tronçon de trajectoire (n) déterminée est mesurée; que la valeur mesurée ($x_i$) pour le parcours du piston est comparée avec une valeur de consigne ($x_s$) pour le déplacement du piston; et que la valeur différentielle ($x_s$ - $x_i$) est mémorisée et ajoutée algébriquement, lors du parcours du tronçon de trajectoire (n) au cours du cycle opératoire suivant, comme valeur de consigne de correction (K) à une valeur de consigne de base ($f_{sg}$) pour une régulation ou une commande de l'orifice de tuyère du dispositif d'application (3).

2. Procédé selon la revendication 1, caractérisé en ce que la variation de l'ouverture de tuyère du dispositif d'application (3) est réalisée par une commande électrique.

3. Procédé selon l'une des revendications précédentes, caractérisé en ce que, lors de l'ouverture maximale de l'orifice de tuyère du dispositif d'application (3), la pression exercée sur le piston (9) du système de piston-cylindre (9, 7) est variée en fonction de la valeur de consigne ou de l'erreur de réglage pour le débit.